# FASCICULE DE BREVET EUROPEEN

(11) **EP 0 805 583 B1**
(45) Date de publication et mention de la délivrance du brevet: **19.01.2005**
(21) Numéro de dépôt: 97400940.9
(22) Date de dépôt: 25.04.1997
(51) Int. Cl.: H04M 9/08

(54) **Poste téléphonique mains-libres**
Freisprecheinrichtung
Hand-free telephone set

(30) Priorité: 30.04.1996 FR 9605433
(43) Date de publication de la demande: 05.11.1997
(73) Titulaire: SAGEM SA, 75783 Paris Cédex 16 (FR)
(72) Inventeur: Carre, Olivier, 95820 Jouy-Le-Mountier (FR); Menu, Michel, 95000 Cergy (FR)
(74) Mandataire: Bloch, Gérard

(56) Documents cités:
- EP-A- 0 413 641
- WO-A-91/20149
- WO-A-92/19048
- US-A- 5 099 472
- US-A- 5 353 348

## Description

Un poste téléphonique mains-libres permet à son utilisateur de converser avec un interlocuteur distant sans devoir tenir le combiné téléphonique à la main.

Un poste mains-libres comporte un microphone et un haut-parleur incorporés dans son boîtier, de plus grande sensibilité que ceux du combiné. De ce fait, l'utilisateur peut utiliser son poste, combiné raccroché, en en étant éloigné.

Cette augmentation de la portée, pour la voie d'émission du poste sur laquelle se trouve le microphone et pour la voie de réception aboutissant au haut-parleur, induit cependant des problèmes techniques, car le signal vocal provenant du correspondant est restitué à fort niveau par le haut-parleur et subit une réflexion sur les murs du local où se trouve le poste ainsi que dans le boîtier du poste, avant d'être partiellement capté en retour par le microphone. Le signal parasite ainsi capté est renvoyé en ligne, en superposition avec le signal vocal de l'utilisateur local, et constitue, pour le correspondant, un écho.

Par ailleurs, comme la ligne téléphonique transmet les signaux dans les deux sens, le poste comporte un circuit duplexeur, d'interface ligne, raccordant la ligne à la voie d'émission et à la voie de réception du poste. Le duplexeur permet d'injecter en ligne les signaux à émettre et d'en recevoir les signaux provenant du correspondant, sans toutefois recevoir les signaux injectés localement, afin d'éviter un accrochage phonique ou effet Larsen. En fait, sur la voie réception, le duplexeur ne peut éviter de prélever un signal composite représentant la totalité des signaux reçus et émis, mais, après prélèvement sur la voie de réception, il y soustrait le signal émis par le microphone pour ainsi n'appliquer au haut-parleur que le signal reçu du correspondant. Cette soustraction ou équilibrage, annulant le retour des signaux émis, n'est cependant jamais parfaite car l'équilibre visé dépend de l'impédance de ligne, qui peut varier d'une ligne à l'autre et dans le temps. De ce fait, et en pratique, une partie du signal émis depuis le microphone est réfléchie, au niveau du duplexeur, vers le haut-parleur.

En bref, les voies d'émission et de réception du poste constituent une boucle phonique, comportant, d'un côté, la réflexion acoustique du local et, de l'autre côté, la réflexion électrique du duplexeur. Or, dans le cas du poste mains-libres, la sensibilité du microphone et du haut-parleur est telle que le signal parcourant la boucle est amplifié jusqu'à saturation des circuits et production d'un effet Larsen.

Pour éviter l'effet Larsen et l'effet d'écho mentionné ci-dessus, il est connu de faire fonctionner le poste à l'alternat, c'est-à-dire uniquement en émission ou bien en réception, ce qui coupe la boucle d'accrochage Larsen et d'écho. Une mesure permanente du signal du microphone et de celui reçu de la ligne permet de déterminer celui des deux interlocuteurs qui produit la plus forte énergie vocale et d'activer en conséquence, dans le poste, la voie émission ou la voie réception.

Une telle solution présente cependant des inconvénients car un interlocuteur bavard et à forte voix peut monologuer longtemps sans pouvoir être interrompu par l'autre. En outre, s'il s'agit de deux postes mains-libres qui sont reliés, leur fonctionnement à l'alternat n'est pas synchronisé, si bien qu'ils peuvent se trouver en phase c'est-à-dire tous deux en émission, sans aucune réception, ou bien en réception, sans aucune émission. On aboutit alors à une conversation hachée.

Il peut être prévu d'effectuer des filtrages anti-écho, acoustique et électrique, au moyen de filtres adaptatifs, c'est-à-dire modifiant progressivement leurs paramètres de filtrage en déterminant un modèle du local ou de la ligne pour faire converger l'énergie de l'écho vers un minimum. L'effet Larsen peut aussi être éliminé par un filtre effectuant un décalage de fréquence, en cas de détection d'accrochage phonique sur une fréquence, et diminuant ainsi le gain de boucle pour celle-ci.

Cependant, les temps de convergence des filtres sont relativement élevés et ne permettent pas de s'adapter aux variations rapides de l'environnement, comme par exemple le déplacement d'une personne ou l'ouverture d'une porte modifiant les échos du local.

La présente invention vise à pallier les inconvénients évoqués ci-dessus, afin de permettre un fonctionnement full-duplex.

A cet effet, l'invention concerne un poste téléphonique mains-libres, agencé pour être raccordé à une ligne téléphonique portant des signaux phoniques et comportant une voie d'émission et une voie de réception, chaque voie comportant des moyens d'atténuation et des moyens de filtrage adaptatif d'échos de l'autre voie, poste caractérisé par le fait qu'il comporte des moyens de mesure d'un défaut d'adaptation des moyens de filtrage, les moyens de mesure étant agencés pour activer les moyens d'atténuation au moins d'une des voies lorsque le défaut dépasse un seuil prédéterminé.

Ainsi, dès l'apparition d'un défaut dépassant un seuil, l'activation des moyens d'atténuation fait passer du fonctionnement full-duplex, sans atténuation, à un fonctionnement à l'alternat ou en full-duplex dégradé, avec atténuation. Cela étouffe les effets du défaut d'adaptation et permet ainsi aux moyens de filtrage de se réadapter dans de bonnes conditions, donc d'éliminer le défaut et de permettre aux moyens de mesure de rétablir alors le fonctionnement full-duplex lorsque le nouvel environnement a été pleinement appréhendé.

L'invention sera mieux comprise à l'aide de la description suivante d'une forme de réalisation préférée du poste mains-libres de l'invention, en référence au dessin annexé, sur lequel:

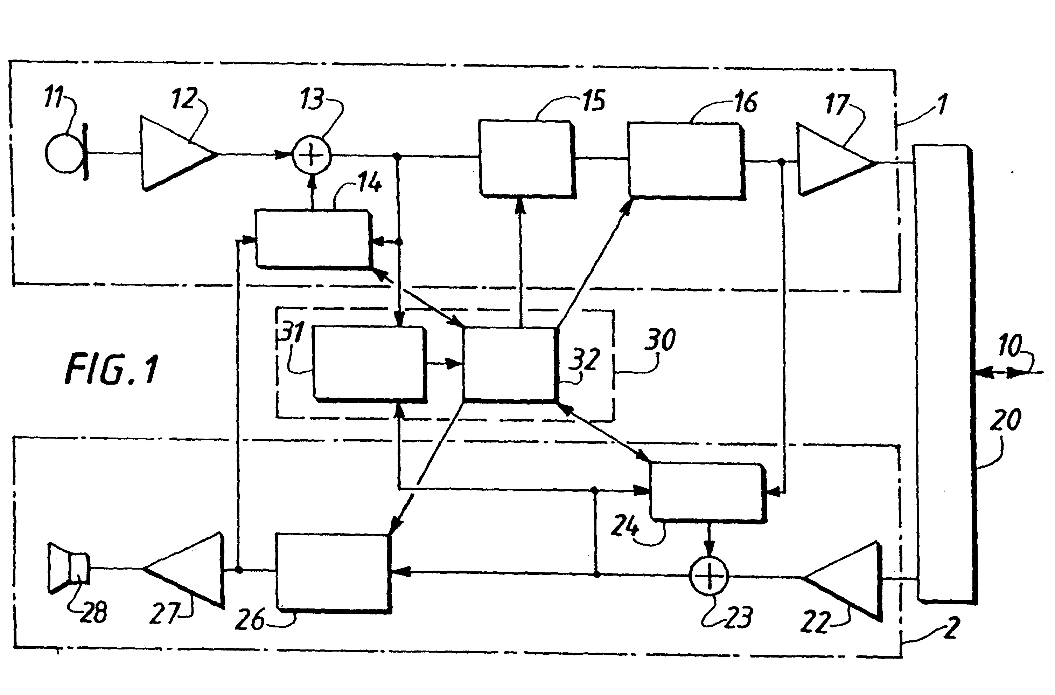

- la figure 1 est une représentation par blocs fonctionnels du poste de l'invention, et
- la figure 2 est un organigramme illustrant le séquencement du réglage phonique du poste.

Le poste mains-libres représenté comporte une voie d'émission 1 et une voie de réception 2, reliées à une ligne téléphonique 10, ainsi qu'une unité centrale 3 commandant les voies 1 et 2. D'une façon générale, la ligne téléphonique portant des signaux phoniques est toute liaison permettant la transmission d'une conversation, comme par exemple une liaison hertzienne ou encore un réseau de transmission de données.

La voie d'émission 1 comporte, dans le sens de transmission des signaux phoniques, un microphone 11 de mains-libres, un convertisseur analogique/numérique (CAN) 12 relié à des premières entrées d'un additionneur-soustracteur 13 lui-même associé à un filtre anti-écho acoustique 14 monté en rebouclage entre sa sortie et ses deuxièmes entrées, un filtre anti-Larsen 15, un atténuateur commandé 16 et un convertisseur numérique/analogique (CNA) 17 relié en sortie à la ligne 10 à travers un circuit hybride 20 de passage 2 fils (ligne 10)/4 fils (2 fils émission, 2 fils réception).

La voie de réception 2 comporte, à partir du circuit 20, un CAN 22 relié à des premières entrées d'un additionneur-soustracteur 23 lui-même associé à un filtre anti-écho ligne 24 monté en rebouclage entre sa sortie et ses deuxièmes entrées, un atténuateur commandé 26 et un CNA 27 commandant un haut-parleur 28 de mains-libres.

Le filtre 14 reçoit aussi le signal issu de l'atténuateur 26, tandis que le filtre 24 reçoit celui de l'atténuateur 16.

L'unité centrale 30 comporte un circuit 31 de mesure des énergies des signaux injectés sur les voies 1 et 2, relié ici en sortie des additionneurs-soustracteurs 13 et 23. Un circuit 32 de mesure de défauts d'adaptation, comportant un microprocesseur, reçoit les résultats de mesure ci-dessus ainsi que des signaux de défaut, ou désadaptation, provenant des filtres 14 et 24.

Le circuit 32 commande, par des liaison non toutes représentées, les circuits 13 à 16 et 23 à 26 comme expliqué plus loin. Il assure aussi, de façon classique, la synchronisation des CAN et CNA 12, 22 et 17, 27 par rapport aux autres circuits ci-dessus 13-16 et 23-24, 26, qui sont tous numériques.

Bien qu'un traitement analogique des signaux des deux voies ne soit pas à exclure, donc sans nécessité des CAN et CNA, c'est ici un seul processeur de traitement du signal qui assure numériquement les fonctions des circuits 13-16 et 23-24, 26, les CAN et CNA 12, 22 et 17, 27 pouvant aussi être intégrés dans le processeur. Il aurait aussi pu être prévu une ligne numérique.

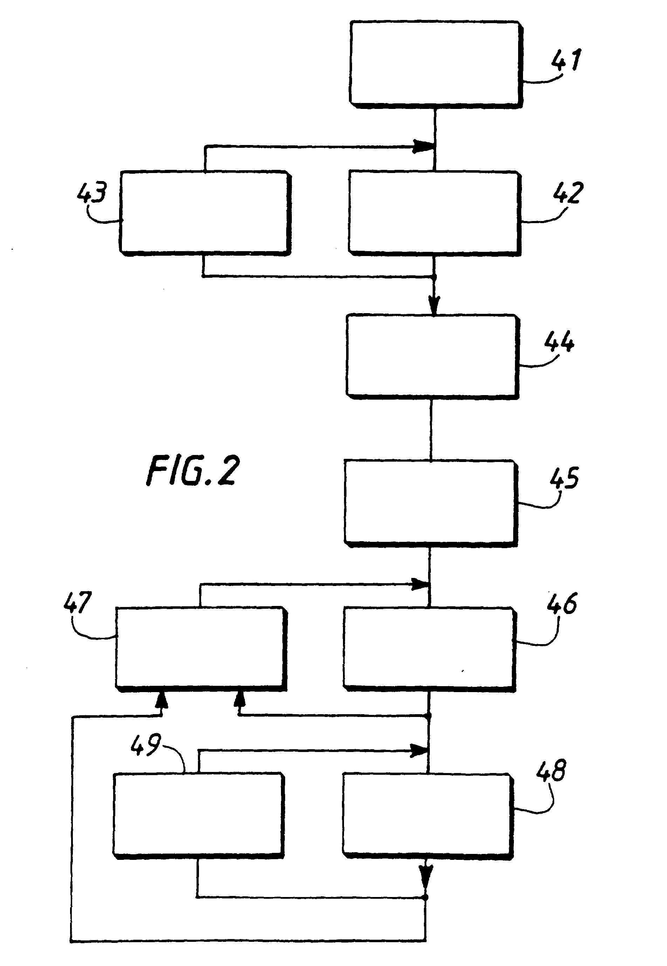

Le fonctionnement du poste va maintenant être expliqué en regard de l'organigramme de la figure 2.

Sous la commande du circuit de mesure 32, les voies 1 et 2 passent par divers états en fonction des informations provenant des circuits surveillés par le circuit 32.

Lors de l'établissement d'une communication téléphonique, à une étape 41, le circuit 32 initialise, c'est-à-dire met à zéro, des coefficients de filtrage utilisés dans le filtre 14 pour modéliser acoustiquement le local dans lequel se trouve le poste représenté. Le circuit 32 commande aussi l'insertion d'une atténuation, ici sur les deux voies 1 et 2, au moyen des atténuateurs 16 et 26. L'atténuation en au moins un endroit de la boucle phonique constituée par les voies 1 et 2, le circuit 20 et les parois du local évite ainsi un accrochage Larsen. En outre, l'atténuation de la voie d'émission 1 évite un retour d'écho acoustique trop important vers la ligne 10.

Dans une étape 42, le circuit 32 commande le filtre 14 pour figer les coefficients, c'est-à-dire figer le modèle acoustique du local après une certaine durée d'adaptation ou avant, dès détection d'absence de défaut d'adaptation, comme expliqué plus loin. Il commande aussi l'initialisation ou réinitialisation des coefficients du filtre de ligne 24 et l'activation de l'adaptation de ceux-ci pour modéliser la ligne 10 et le circuit hybride 20.

On passe ensuite à une étape 43 dans laquelle le circuit 32 surveille un défaut d'adaptation du filtre ligne 24.

On rappellera qu'un filtre anti-écho mémorise temporairement le signal engendrant l'écho pour ensuite le soustraire au signal de l'autre voie affecté par cet écho. L'adaptation consiste à retarder et à pondérer, de façon appropriée, chaque composante fréquentielle du signal engendrant l'écho pour la soustraire au signal d'écho. En cas d'adaptation imparfaite des coefficients de filtrage déterminant l'adaptation, le filtre détecte qu'il subsiste un résidu de filtrage, ou écho subsistant, présentant une corrélation avec le signal engendrant l'écho et il fait évoluer ses coefficients pour tenter d'annuler cet écho en faisant converger son modèle vers le modèle réel du local. Le résidu de filtrage représente donc un défaut d'adaptation, qui est transmis au circuit 32.

Pour plus de détails sur les filtres 14, 15, 24, on se reportera aux documents US-A-5 099 472, WO 89/05068, JP 5-14476 et JP 5-48707, cités ici à titre de référence.

Le circuit 32 surveille ici, à une étape 43, l'amplitude du défaut ci-dessus provenant du filtre ligne 24 pour, si elle dépasse un seuil prédéterminé, repasser à l'étape 42 et ainsi réinitialiser le filtre de ligne 24 pour éviter une éventuelle divergence, retardant ou même empêchant une adaptation, ou convergence, ultérieure. De même, une convergence trop lente est détectée, c'est-à-dire qu'on repasse aussi à l'étape 42 si un seuil prédéterminé de temps de non-adaptation est dépassé. Un défaut d'adaptation correspond donc au dépassement d'un seuil d'amplitude du signal de défaut d'adaptation ou au dépassement d'un seuil de durée pendant laquelle le signal de défaut d'adaptation dépasse une valeur déterminée.

A toutes les étapes, le circuit 31 assure la détection d'un effet Larsen et le circuit 32 commande alors le filtre 15 qui décale alors légèrement le spectre de fréquences du signal le traversant et réduit ainsi immédiatement le gain de boucle pour la fréquence d'accrochage Larsen.

En l'absence de retour à l'étape 42, le circuit 31 détecte, à une étape 44, si de l'énergie est présente sur une seule voie, 1 ou 2, et en informe le circuit 32, qui désactive l'atténuateur 16 ou 26 de l'autre voie, 2 ou 1. En cas de présence d'énergie sur les deux voies 1 et 2, le circuit 32 désactive l'atténuateur 16 ou 26 de celles des voies 1 et 2 qui porte le signal de plus faible énergie.

A une étape 45, on poursuit l'adaptation du modèle de ligne dans le filtre 24 si le circuit 31 détecte un signal d'énergie de la voie émission 1. On poursuit en outre la comparaison des énergies des deux voies 1 et 2 pour que le circuit 32 bascule l'atténuation sur celle des voies portant le signal de plus faible énergie. On fonctionne ainsi en pseudo-alternat, en conservant une transmission à faible niveau sur la voie "coupée".

A une étape 46 suivante, l'adaptation du modèle de ligne dans le filtre 24 est poursuivie, pour atteindre un niveau satisfaisant d'annulation d'écho-ligne. Si la voie de réception 2 reçoit un signal vocal provenant d'un interlocuteur distant et que l'écho du local est prépondérant, dans la voie d'émission 1, sur le signal de l'utilisateur du poste, le circuit 32 commande l'adaptation du modèle du local dans le filtre 14.

A une étape 47 suivante, homologue de l'étape 43, on détecte si le temps de convergence du filtre 14 ou l'amplitude du signal de défaut d'adaptation dépasse un seuil prédéterminé et on repasse alors à l'étape 46 après réinitialisation des coefficients du filtre 14.

En l'absence de défaut d'adaptation sur chacune des voies d'émission et réception 1 et 2, on passe à une étape 48 dans laquelle le circuit 32 désactive celui des circuits atténuateurs 16, 26 qui était actif et établit ainsi un état de full-duplex vrai, sans atténuation.

On comprendra que par les termes "sans atténuation" on entend une transmission sensiblement conforme au gabarit d'amplitude prévu pour la transmission des signaux phoniques à travers le réseau téléphonique, permettant de fournir ou restituer un signal phonique d'amplitude suffisante sans cependant risquer une saturation des circuits du réseau téléphonique ou des voies d'émission-réception du poste. Pour régler les voies ci-dessus selon un tel gabarit, il peut être nécessaire d'y prévoir en permanence une atténuation, qui ne concerne aucunement l'atténuation variable de la présente invention.

A l'étape 48, on poursuit l'adaptation des modèles des filtres 14 et 24. En cas d'apparition d'un défaut d'adaptation du modèle (14) du local dépassant un seuil bas déterminé, ici inférieur au seuil (haut) de l'étape 47, le circuit 32 applique (étape 49) une atténuation limitée (16) sur la voie d'émission 1. En d'autres termes, et d'une façon générale, le circuit 32 active l'atténuateur 16 lorsque le défaut dépasse le seuil bas et commande une augmentation de l'atténuation lorsque le seuil haut est dépassé. On repasse à l'étape 48 lorsque le seuil bas de l'étape 49 est franchi à la descente.

En cas de dépassement du seuil haut prédéterminé de défaut d'adaptation du filtre 14, on repasse à l'étape 46, c'est-à-dire que le circuit 32 active l'un des atténuateurs 16, 26, ici l'atténuateur 16 de la voie d'émission 1, pour repasser au fonctionnement intermédiaire entre le full-duplex et l'alternat. On passe ici par l'étape 47 de réinitialisation des coefficients du filtre 14.

Il pourrait être prévu d'activer les deux atténuateurs 16, 26, comme à l'étape 41.

En d'autres termes, dans les étapes 41 à 48, le circuit 32 désactive ici, en cas de défaut dépassant le seuil, les filtres 14, 24 des deux voies 1 et 2 successivement l'un après l'autre jusqu'à disparition de tout défaut dépassant le seuil. Cela permet de régler avec plus de précision chaque filtre 14, 24, en évitant une évolution de l'autre filtre 24, 14. En particulier, le filtre 14 de la voie d'émission 1 est désactivé (étape 42) avant le filtre 24 de la voie de réception 2.

## Revendications

1. Poste téléphonique mains-libres, agencé pour être raccordé à une ligne téléphonique (10) portant des signaux phoniques et comportant une voie d'émission (1) et une voie de réception (2), chaque voie (1; 2) comportant des moyens d'atténuation (16; 26) et des moyens (14; 24) de filtrage adaptatif d'échos de l'autre voie (2; 1), poste **caractérisé par le fait qu'**il comporte des moyens (32) de mesure d'un défaut d'adaptation des moyens de filtrage (14; 24), les moyens de mesure (32) étant agencés pour activer les moyens d'atténuation (16; 26) au moins d'une des voies (1; 2) lorsque le défaut dépasse un seuil prédéterminé.

2. Poste téléphonique mains-libres selon la revendication 1, dans lequel les moyens de mesure (32) sont agencés pour, suite à un défaut dépassant le seuil, désactiver les moyens de filtrage (14; 24) des deux voies (1, 2) successivement les uns après les autres jusqu'à disparition de tout défaut dépassant le seuil.

3. Poste téléphonique mains-libres selon la revendication 2, dans lequel les moyens de filtrage (14) de la voie d'émission sont désactivés avant ceux de la voie de réception.

4. Poste téléphonique mains-libres selon l'une des revendications 1 à 3, dans lequel des moyens (31) de détermination de l'énergie des signaux des deux voies coopèrent avec les moyens de mesure (32) pour activer les moyens d'atténuation (16; 26) de celle des deux voies (1, 2) portant les signaux de plus faible énergie.

5. Poste téléphonique mains-libres selon l'une des revendications 1 à 4, dans lequel les moyens de mesure (32) sont agencés pour réinitialiser les moyens de filtrage (14; 24) en cas de défaut d'adaptation.

6. Poste téléphonique mains-libres selon l'une des revendications 1 à 5, dans lequel les moyens de mesure (32) sont agencés pour activer les moyens d'atténuation (16) de la voie d'émission (1) lorsque le défaut dépasse un seuil bas mais pour que l'atténuation soit augmentée lorsque le défaut dépasse un seuil haut.

7. Poste téléphonique mains-libres selon la revendication 6, dans lequel les moyens de mesure (32) sont agencés pour figer l'adaptation des moyens de filtrage (14; 24) lorsqu'ils présentent un défaut d'adaptation inférieur au seuil bas.

## Claims

1. Hands-free telephone set arranged to be connected to a telephone line (10) carrying voice signals and comprising a transmission channel (1) and a receiving channel (2), each channel (1; 2) having means of attenuation (16: 26) and means for adaptive filtering (14; 24) of echoes of the other channel (2; 1), the set being **characterised by** the fact that it has means (32) for measuring an adaptation defect in the filtering means (14; 24), the means of measuring means (32) being arranged to activate the means of attenuation (16; 26) of at least one of the channel's (1; 2) when the defect is beyond a predetermined threshold.

2. Hands-free telephone set according to Claim 1, whereby the measuring means (32) are arranged, following a defect going beyond the threshold, to deactivate the means (14; 24) of filtering the two channels (1; 2) successively, some after others, until any defect beyond the threshold disappears.

3. Hands-free telephone set according to Claim 2, whereby the means (14) for filtering the transmission channel are deactivated before those of the receiving channel.

4. Hands-free telephone set according to one of the claims 1 to 3, whereby the means (31) for determining the power of the signals of the two channels work in conjunction with the measuring means (32) to activate the means of attenuation (16: 26) of whichever of the two channels (1;2) carries the lower power signals.

5. Hands-free telephone set according to one of the Claims 1 to 4, whereby the measuring means (32) are arranged to reinitiate the filtering means (14; 24) in the case of an adaptation defect.

6. Hands-free telephone set according to Claims 1 to 5, whereby the measuring means (32) are arranged to activate the means (16) for attenuation of the transmission channel (1) when the defect exceeds a low threshold but so that the attenuation is increased when the defect exceeds a high threshold.

7. Hands-free telephone set according to Claim 6, whereby the measuring means (32) are arranged to freeze the adaptation of the filtering means (14; 24) when they show an adaptation defect below the low threshold.

## Patentansprüche

1. Telefon-Freisprechstelle zum Anschließen an eine Telefonleitung (10), welche Tonsignale überträgt und einen Sendepfad (1) und einen Empfangspfad (2) aufweist, wobei jeder Pfad (1; 2) Dämpfungseinrichtungen (16; 26) und Einrichtungen (14; 24) zum adaptiven Filtern von Echos von dem anderen Pfad (2; 1) aufweist,
**dadurch gekennzeichnet,**
**daß** sie eine Meßeinrichtung (32) zum Messen eines Anpassungsfehlers der Filtereinrichtungen (14; 24) aufweist, wobei die Meßeinrichtung (32) dazu ausgelegt ist, die Dämpfungseinrichtungen (16; 26) von mindestens einem der Pfade (1; 2) zu aktivieren, wenn der Fehler einen vorgegebenen Schwellwert übersteigt.

2. Telefon-Freisprechstelle nach Anspruch 1,
bei der die Meßeinrichtung (32) dazu ausgelegt ist, im Anschluß an einen den Schwellwert übersteigenden Fehler die Filtereinrichtungen (14; 24) der beiden Pfade (1, 2) nacheinander bis zum Verschwinden eines jeglichen, den Schwellwert übersteigenden Fehlers zu deaktivieren.

3. Telefon-Freisprechstelle nach Anspruch 2,
bei der die Filtereinrichtungen (14) des Sendepfades vor denjenigen des Empfangspfades deaktiviert werden.

4. Telefon-Freisprechstelle nach einem der Ansprüche 1 bis 3,
bei der eine Einrichtung (31) zum Bestimmen der Energie der Signale der beiden Pfade mit der Meßeinrichtung (32) zusammenwirkt, um die Dämpfungseinrichtungen (16; 26) von demjenigen der beiden Pfade (1, 2) zu aktivieren, der die Signale mit der geringeren Energie überträgt.

5. Telefon-Freisprechstelle nach einem der Ansprüche 1 bis 4,
bei der die Meßeinrichtung (32) dazu ausgelegt ist, im Fall eines Anpassungsfehlers die Filtereinrichtungen (14; 24) zu reinitialisieren.

6. Telefon-Freisprechstelle nach einem der Ansprüche 1 bis 5,
bei der die Meßeinrichtung (32) dazu ausgelegt ist, die Dämpfungseinrichtungen (16) des Sendepfades (1) zu aktivieren, wenn der Fehler einen niedrigen Schwellwert übersteigt, daß jedoch die Dämpfung erhöht wird, wenn der Fehler einen hohen Schwellwert übersteigt.

7. Telefon-Freisprechstelle nach Anspruch 6,
bei der die Meßeinrichtung (32) dazu ausgelegt ist, die Anpassung der Filtereinrichtungen (14; 24) festzulegen, wenn sie einen Anpassungsfehler aufweisen, der unter dem niedrigen Schwellwert liegt.
